(19) Europäisches Patentamt
European Patent Office
Office européen des brevets

(11) **EP 4 372 454 A1**

(12) **EUROPEAN PATENT APPLICATION**

(43) Date of publication:
**22.05.2024 Bulletin 2024/21**

(21) Application number: **22207858.6**

(22) Date of filing: **16.11.2022**

(51) International Patent Classification (IPC):
**G02B 30/00** (2020.01)   **G02B 27/01** (2006.01)

(52) Cooperative Patent Classification (CPC):
**G02B 27/18; G03B 21/00;** G02B 27/0172;
G02B 30/10; G02B 2027/0112; G02B 2027/012;
G02B 2027/0145; H04N 9/3102

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **CREAL SA**
**1024 Ecublens VD (CH)**

(72) Inventor: **Smolik, Grégoire**
**1022 Chavannes-près-Renens (CH)**

(74) Representative: **P&TS SA (AG, Ltd.)**
**Avenue J.-J. Rousseau 4**
**P.O. Box 2848**
**2001 Neuchâtel (CH)**

(54) **NEAR-EYE LIGHT FIELD PROJECTOR WITH LOW IMAGE NOISE**

(57)     A near-eye light field projector (1) comprising point light sources (111, 112, 113) arranged in a light source plane (10) and emitting an incident light beams (200); a modulation device (40) generating diffracted modulated light beams (410, 411, 412); projection optics (21, 22) forming images (310, 511-513) in an image plane (60); and relay optics (23, 24) forming viewpoints (810) in a viewpoint plane (80). The point light sources (111, 112, 113) are arranged such that diffracted modulated light beams (410) are combined and form combined images (310) while other diffracted modulated light beams (411, 412) form diffracted images (511-513). The light field projector (1) further comprises a spatial filter (61) configured to block the diffracted modulated light beams (411, 412), such that the relay optics (23, 24) projects only viewpoints (810) from the combined images (310).

(b)

Fig. 3

EP 4 372 454 A1

## Description

### Technical domain

The present disclosure concerns a near-eye light field projector that sequentially projects a near-eye projected image to the eyes of a user. The near-eye light field projector allows for projecting images where unwanted diffraction orders do not overlap with the image and unwanted diffraction orders are reduced. More particularly, present disclosure concerns a near-eye light field projector that is adapted for virtual, augmented, mixed reality glasses applications. The present disclosure further concerns a wearable device comprising the near-eye light field projector, such as augmented/mixed reality or smart glasses.

### Related art

Known near-eye light field projectors comprise a light source typically comprising an array of point-light sources that are collimated into collimated beams. The collimated beams illuminate a spatial light modulator (SLM) or diffraction grating under a different set of angles of incidence. Each reflected (or transmitted) beam will carry out a certain image information, produced by the modulation of the SLM or diffraction grating. Intermediate optics re-images the point-light sources into viewpoints. The viewpoints form a light field eye box, allowing a user to see an authentic 3D rendering of a digital scene.

The SLM or diffraction grating typically comprises a two-dimensional array of pixels. The illumination of a two-dimensional array of pixels is equivalent to the illumination of a two-dimensional grating. The collimated illumination of a two-dimensional grating may produce a two-dimensional diffraction interference pattern when viewed at infinity. The pattern consists of multiple diffraction orders with varying intensity. The diffraction interference pattern can be observed in the Fourier plane of the SLM or diffraction grating. In the diffraction interference pattern, the maximum intensity of the center of the diffraction envelope may not match the center of the diffraction pattern. The maximum of diffraction may not correspond with the zero order, and multiple diffraction orders with relatively high intensities can be observed instead of a single bright image. Thus, this is detrimental to the light-field image since the information a viewer sees comprises multiple images of various intensities (ghost images) coming from various directions.

Document US20180160784 A1 discloses an optical system that includes a micro-mirror array optical modulator of the digital light processing (DLP) type. An optical element has an optimized limiting aperture for defining portions of a modulated light beam that are blocked and remaining portions that are transmitted. The optical element allows for optimizing light collection and contrast in a projection device.

### Summary

The present disclosure concerns a near-eye light field projector comprising a light source comprising a plurality of point-light sources arranged in a light source plane, wherein at least two point-light sources have different wavelengths, and each point-light source is configured to emit an incident light beam. The projector further comprises a modulation device configured to diffract the incident light beams and generate diffracted modulated light beams. The projector further comprises projection optics configured to project the diffracted modulated light beams and form images in an image plane, the images forming a two-dimensional diffraction interference pattern comprising a plurality of diffraction orders, and relay optics configured to receive the images and to form viewpoints in a viewpoint plane destined to be in a user's eyebox. The point-light sources are arranged in the light source plane such that the modulated light beams comprise combined modulated light beams forming combined images, each combined image corresponding to an image of the diffracted point-light sources of different wavelength, and diffracted modulated light beams forming diffracted images. The light field projector further comprises a spatial filter configured to block the diffracted modulated light beams forming the diffracted images, such that the relay optics projects only viewpoints from the combined images.

The present disclosure further concerns a wearable device comprising the near-eye light field projector, such as augmented/mixed reality or smart glasses.

The near-eye light field projector allows avoiding unwanted diffraction orders of a diffraction interference pattern produced by the modulation device to overlap with the projected image to the eyes of a user. The near-eye light field projector further allows point-light sources having different wavelengths to overlap in a single combined image.

### Short description of the drawings

Exemplar embodiments of the invention are disclosed in the description and illustrated by the drawings in which:

Fig. 1a represents a near-eye light field projector comprising a light source having a plurality of point-light sources generating incident light beams forming point-light images in an image plane, a modulation device, projection optics, and relay optics;

Fig. 1b shows a simplified representation of the light field projector of Fig. 1a, without the relay optics;

Fig. 2 shows a simplified representation of the light field projector, where the modulation device diffracts the incident light beams;

Fig. 3a shows a simplified representation of the light field projector without the relay optics, wherein the light source comprises point-light sources of different wavelengths;

Fig. 3b shows the light field projector of Fig. 3a further comprising the relay optics and a spatial filter;

Fig. 4 represent a spatial filter comprising an array of pinholes;

Fig. 5 illustrates a method for obtaining an optimized arrangement of the point-light sources in a light source plane of the light source,

Fig. 6 shows a diffraction interference pattern generated in the image plane by the incident light beams diffracted by the modulation device;

Fig. 7 represents an optimized lattice of the viewpoints; and

Fig. 8 shows a typical light source pattern after the optimization process, where light sources belonging to a single viewpoint are tagged with the same number.

## Examples of embodiments

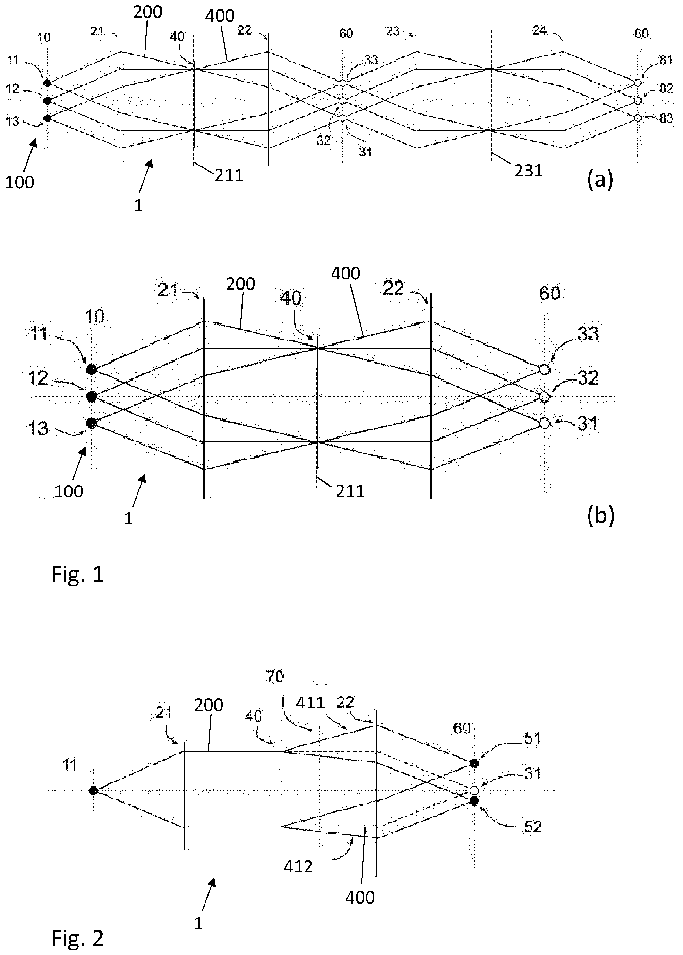

**Fig. 1a** represents a sequential near-eye light field projector 1 comprises a light source 100 comprising a plurality of point-light sources 11, 12, 13, wherein at least two point-light sources have different wavelengths. Each point-light source 11, 12,13 is configured to emit an incident light beam 200. The point-light sources 11,12,13 can be arranged in a light source plane 10. The point-light sources 11, 12, 13 can comprise LEDs, µLEDs, lasers, or any other point-light-sources capable of emitting an incident light beam 200.

Each point-light source 11,12,13 can be configured to emit an incident light beam 200 of which a wavelength spectrum is a narrow band. Then, the point-light sources 11,12,13 can comprise point-light sources capable of emitting a narrow-band incident light beam 200 of which a wavelength spectrum is a narrow band.

The point-light sources 11,12,13 are configured to illuminate a modulation device 40 configured to modulate the incident light beams 200 and generate modulated light beams 400 and a point-light image 31, 32, 33 of each point-light source, for each incident light beam 200. The modulation device 40 can comprise a spatial light modulator (SLM) that behaves like a diffraction grating. The spatial light modulator 40 can comprise a two-dimensional array of pixels. The illumination of a two-dimensional array of pixels is equivalent to the illumination of a two-dimensional grating. In one aspect, the SLM 40 can comprise an electrically addressed spatial light modulator ferroelectric liquid crystals (FLCoS) or a digital light processing (DLP). Here, a pixel can be a single mirror of a DLP-type SLM or a pixel in an FLCOS device, etc.

The light field projector 1 further comprises projection optics 21, 22 configured to project the incident light beams 200 and form the point-light images 31, 32, 33 in an image plane 60. In the example of Figs. 1a and b, the projection optics comprise a first projection optics 21 configured to form a first focal plane 211, and a second projection optics 22 configured to project the point-light image 31, 32, 33 of the modulated light beams 400 in the image plane 60. In some embodiments, the first projection optics 21 can be configured to collimate the incident light beams 200 (see Fig. 2), such that the incident light beams 200 are collimated.

In one aspect, the modulation device 40 can be arranged in the first focal plane 211. More generally, the modulation device 40 can be arranged so that the modulator is completely illuminated by the incident light beams 200.

The light field projector 1 can further comprise relay optics. For example, the relay optics can comprise a first relay optical element 23 configured to project the modulated light beams 400 and form intermediate images (not shown) in an intermediate image plane 231 and a second relay optical element 24 configured to project the modulated beam light 400 to form viewpoints 81, 82, 83 in a viewpoint plane 80. The viewpoint plane 80 can correspond to an eyebox of a user. In the absence of diffraction by modulation device 40, the viewpoints 81, 82, 83 appear to be coming from a single point in space with a specific direction.

In one aspect, the plurality of optical elements 21, 22 and relay optics 23, 24 can comprise lenses or metalenses.

The near-eye light field projector 1 is configured for sequentially generating the virtual viewpoints 81, 82, 83 that form the light-field.

**Fig. 1b** shows a simplified representation of the light field projector 1 without the relay optics 23, 24.

Depending on the type of modulation device 40, the latter can diffract the incident light beams 200 and produces a two-dimensional diffraction interference pattern when viewed at infinity. For example, **Fig. 2** shows a simplified representation of the light field projector 1 without the relay optics 23, 24, where the modulation device 40 illuminated by the incident light beams 200 diffracts the incident light beams 200. The modulation device 40 projects modulated light beams 400 comprising diffracted beams 411, 412 forming diffracted images 51, 52 (diffraction orders forming a diffraction interference pattern). In Fig. 2, only one point-light source 11 is represented and is diffracted by the modulation device 40 into a plurality of diffracted beams 411, 412 (two are shown) which form a plurality of diffracted images 51, 52 (two are shown). In the absence of diffraction interference, the modulated light beams 400 (shown by the dashed lines) would form the point-light image 31.

The degradation of the information viewed at the viewpoints 81, 82, 83 due to diffraction interference may not be significant when a user is looking at an image in the focal plane of the modulation device 40 (for example at infinity). However, when a user's eye focuses on a different plane than the plane where the modulation device 40 is arranged (such as the first focal plane 211), for example a focus plane indicated by numeral 70 in Fig. 2, the information at the viewpoints 81, 82, 83 appears as coming from multiple directions, for instance, as many directions as there are diffraction orders.

More particularly, the diffracted images 51, 52 create a two-dimensional diffraction interference pattern overlapping the point-light images 31 (in the absence of diffraction) in the image plane 60. The two-dimensional diffraction interference pattern may comprise multiple diffraction orders with varying intensity. Since the diffraction orders appear in the image plane 60, which may or may not coincide with the fourier plane of the second projection optics 22, the diffraction pattern forms a grid of diffraction orders which appear in the image plane 60.

Therefore, the user sees two identical diffracted images 51, 52 at the same time, the modulated beams 411, 412 being displaced in the focus plane 70. This is detrimental to the light-field image as it creates multiple images of various intensities (ghost images) coming from the wrong directions, adding noise. Moreover, the diffraction interference pattern can vary for each wavelength of the incident light beams 200. This results in red, green, and blue modulated beams 411, 412 for a single viewpoint that seem to come from different directions as well.

An example of modulation device 40 generating a diffraction interference pattern can comprise DLP-type SLM. For instance, the DLP® digital micromirror device (DMD) from Texas Instrument comprises tilting mirrors. The illumination of an array of tilted mirrors is equivalent to the illumination of a blazed grating. Blazed gratings produce diffraction orders where the maximum intensity of the diffracted light does not coincide with the direction of specular reflection. In other words, the center of the diffraction envelope does not match the center of the diffraction interference pattern. Here, the diffraction envelope corresponds to the diffraction pattern of a single pixel of the modulation device 40.

This results in an illumination pattern at infinity where the maximum of diffraction does not correspond with the zero order. Consequently, multiple diffraction orders with relatively high intensities can be observed instead of a single bright spot.

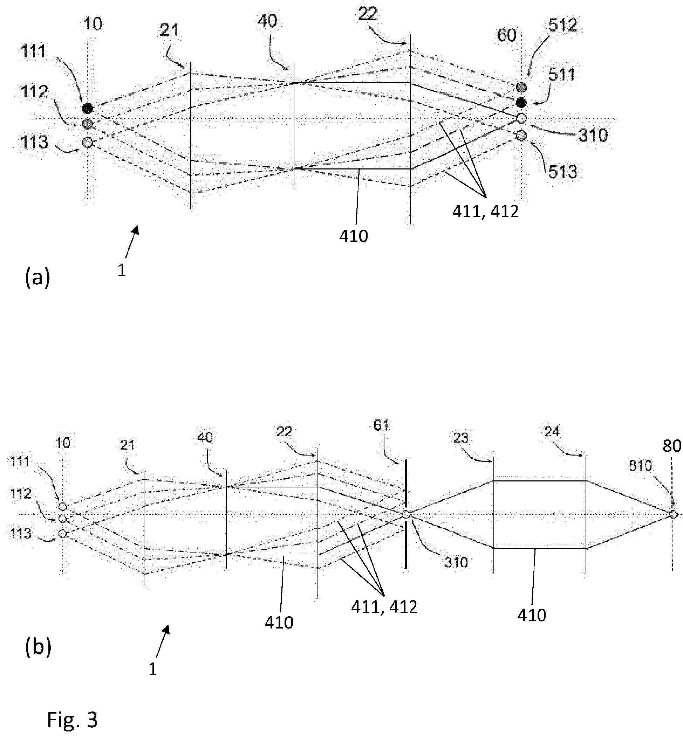

**Fig. 3a** shows a simplified representation of the light field projector 1 without the relay optics 23, 24, wherein the light source 100 comprises point-light sources 111, 112, 113 of different wavelengths. The point-light sources 111, 112, 113 are spatially separated in the light source plane 10. In one aspect, the point-light sources 111, 112, 113 can be arranged in the light source plane 10 such that part of the diffracted modulated light beams 411, 412 are combined (in combined modulated light beams 410) to form combined images 310. Each combined image 310 corresponds to an image of the multiple diffracted point-light sources 111, 112, 113 of different wavelengths.

The point-light sources 111, 112, 113 can be arranged in the light source plane 10 by placing the different point-light sources 111, 112, 113 at defined positions along the orthogonal axis x, y in the light source plane 10.

Other diffracted modulated light beams 411, 412 form diffracted images 511, 512 in the image plane 60. In the example of Fig. 3a, the light source 100 is shown comprising three point-light sources 111, 112, 113, each having a different wavelength.

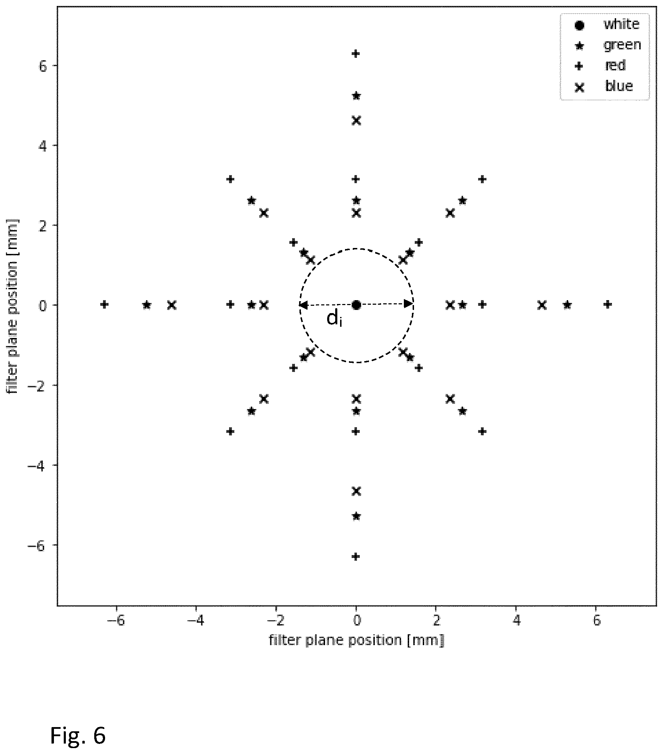

The point-light sources 111, 112, 113 can be further arranged in the light source plane 10 such that the diffracted images 511, 512 are distant from a combined image 310 by an image separation distance $d_i$ that is large enough such that the diffracted images 511, 512 do not overlap the combined image 310. Since the separation distance only depends on the wavelength and the grating pitch. Thus, the distance $d_i$ only depends on the distance set by the shortest wavelength (see Fig. 6).

**Fig. 3b** shows the light field projector 1 of Fig. 3a further comprising the relay optics 23, 24 and a spatial filter 61. The spatial filter 61 is configured to filter unwanted diffraction orders, i.e., to block the propagation of the diffracted modulated light beam 411, 412 that form the diffracted images 511, 512. The diffracted modulated light beam 411, 412 thus cannot form diffracted viewpoints in the viewpoint plane 80. Consequently, only the combined modulated light beams 410 are allowed to propagate and pass through the relay optics 23, 24, forming combined viewpoints 810 in the viewpoint plane 80.

Although Fig. 3b shows only one combined viewpoint 810, the light field projector 1 is configured to from at least two combined viewpoint 810, where each combined viewpoint 810 corresponds to a projected image in the viewpoint plane 80, that appears to be always in focus and appears to be coming from a single point in space with a specific direction.

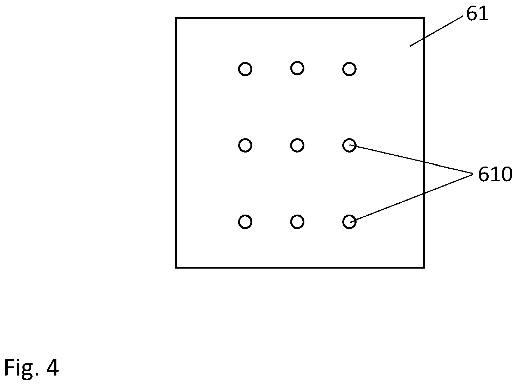

The spatial filter 61 can comprise an array of pinholes 610 (see **Fig. 4**). Here, the point-light sources 111, 112, 113 should be arranged in the light source plane 10 such that the positions of the combined images 310 correspond to the positions of the pinholes 610. The array can be a regular array or any irregular or random array of pinholes 610. The unwanted diffraction orders (diffracted images 511, 512) do not pass through the pinholes 610 and are blocked by the spatial filter 61. Moreover, the point-light sources 111,112,113 should be arranged in the light source plane 10 such that the unwanted diffraction orders corresponding to a given combined viewpoint 810 do not overlap another combined viewpoint.

Alternatively, the spatial filter 61 can comprise a wavelength filter. In the case the light source 100 comprises point-light sources 111, 112, 113 that emit light in a narrow band, each point-light source 111, 112,113 can be individually filtered by the wavelength filter 61.

Alternatively, the spatial filter 61 can comprise an active shutter array. The use of an active shutter array also allows for relaxing the requirement that the point-light sources 111,112,113 should be arranged in the light source plane 10 such that the unwanted diffraction orders corresponding to a given combined viewpoint 810 do not overlap another combined viewpoint. On the other hand, an active shutter array requires a fast shutter speed, matching the high speed of the modulation device 40, and more especially of the SLM. In one aspect, the spatial filter 61 can comprise an electro-optical shutter used as a tunable filter.

The spatial filter 61 can be arranged in the image plane 60. Alternatively, the spatial filter 61 can be arranged in the vicinity of the image plane 60, where the distance between the spatial filter 61 and the image plane 60 should be small enough such that the spatial filter 61 allows the selective passage of the combined modulated light beams 410 while blocking the diffracted beams 411, 412.

The light field projector 1 of Fig. 3b allows for a user to see a light field image with correct depth of focus cues when combined viewpoints 810 reach the user's eye pupil.

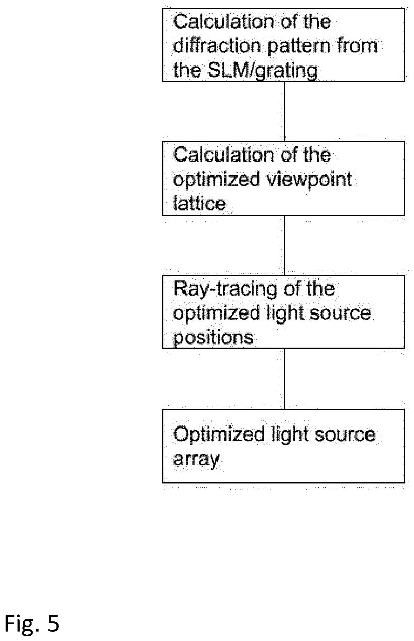

**Fig. 5** illustrates a method for obtaining an optimized arrangement of the point-light sources 111,112,113 in the light source plane 10, in order to avoid unwanted diffraction orders of a diffraction interference pattern produced by the modulation device do not overlap with the projected image to the eyes of a user, thus minimizing ghost images and noise. The method comprises the steps of:

calculating a diffraction interference pattern from the modulation device 40;
calculating an optimized lattice of combined and diffracted images 310, 511, 512, where the diffracted images 511, 512 are distant from a combined image 310 by a separation distance $d_i$; and
from the optimized lattice of combined and diffracted images 310, 511, 512, calculating an optimized arrangement of the point-light sources 111, 112, 113 in the light source plane 10.

The diffraction interference pattern produced by the wavelength of each point-light source 111, 112, 113 can be calculated using the grating equation (1), which provides the diffraction angle in the plane along the plane of the modulation device 40, i.e., along orthogonal axis x, y of the modulation device 40:

$$\theta m = arcsin \left( sin\ \theta_i - \frac{m\lambda}{d} \right) \qquad \text{Eq 1,}$$

where m is the diffraction order, $\lambda$ is the wavelength, d is the period of the grating, $\theta_i$ the incident angle of an incident light beam 200 on the modulation device 40, and $\theta_m$ the output angle of a modulated light beam 400, 411, 412. The diffraction interference pattern forms a grid of diffraction orders which appear in the image plane 60.

A combined image 310 can be formed by the superposition of three point-light sources 111, 112,113, each having a different wavelength. Knowing the diffraction interference patterns for each wavelength, it is possible to calculate the sum of all diffraction interference patterns, as shown in **Fig. 6**. This pattern corresponds to the diffraction interference pattern created by a two-dimensional grating, combined with the diffraction of a pixel of the modulation device 40.

In the example of Fig. 6, the diffraction interference pattern is generated from a red, green and blue point-light sources 111, 112, 113 that are spatially shifted in the light source plane 10 such as to overlap their brightest diffraction orders and forming a white spot, the white spot corresponding to the combined image 310. Fig. 6 only represents a limited number of diffraction orders.

The theoretical amplitude of a diffraction order is proportional to equation (2) (see reference: Using Lasers with DLP DMD technology, DLPA037, Texas Instruments, Sept 2008, https://www.ti.com/lit/pdf/dlpa037):

$$Sinc^2[\pi \frac{a}{\lambda}(sin\ \theta_{m_x} - sin\ \theta_i)]Sinc^2[\pi \frac{a}{\lambda}(sin\ \phi_{m_y} - sin\ \phi_i)] \qquad Eq\ 2,$$

where $\theta$ and $\phi$ are the angles of diffraction in the two axis x, y of the modulation device 40, a is the lateral size of a pixel of the modulation device 40, $m_x$ and $m_y$ are the diffraction orders in the different orthogonal axis x, y of the modulation device 40, $\lambda$ is the wavelength, and i denotes the angle of the center of the diffraction envelope (specular reflection). The calculated diffraction interference pattern takes into account multiple orders of diffraction for each axis x, y of the modulation device 40.

The optimized lattice of combined and diffracted images 310, 511, 512 is then calculated by maximizing the distance between the positions of the combined and diffracted images 511, 512 and the secondary diffraction orders in the image plane 60, such that the diffracted images 511, 512 are distant from a combined image 310 by the image separation distance $d_i$.

In one aspect, when the combined and diffracted images 310, 511, 512 are imaged at an eye pupil (at the viewpoint plane 80), the diffracted viewpoints from the diffracted modulated light beams 411, 412 (not shown) can be separated from each combined viewpoint 810 from the combined images 310, by a separation distance $d_v$ corresponding to a diameter of at least 0.2 mm around the combined viewpoint 810. This condition corresponds to the image separation distance $d_i$ multiplied by a magnification factor of the relay optics 23, 24. If the latter condition is fulfilled, the combined viewpoints 810 are free of unwanted diffraction orders in a circle of at least 0.2 mm diameter. Unwanted diffraction orders cannot be seen when the combined modulated light beams 410 are projected at the pupil of a user.

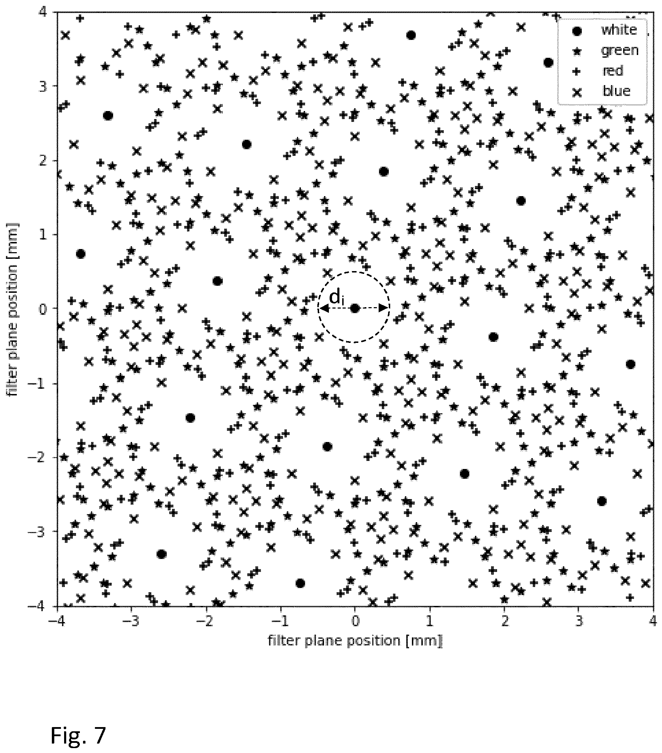

An example of an optimized lattice of combined and diffracted images 310, 511, 512 is represented in **Fig. 7**. In this example, the optimized lattice is obtained with the diffraction interference pattern of the diffracted images 511, 512 is generated by red, green, and blue point-light sources 111, 112, 113 and the optimized arrangement of the point-light sources 111, 112, 113 in the light source plane 10. Only a limited number of diffraction orders are represented in Fig. 7.

Calculating an optimized arrangement of the point-light sources 111, 112, 113 in the light source plane 10 can be performed by ray tracing using a complete optical model of the near-eye light field projector 1, i.e., a numerical model including the optical components between the light source plane 10 and the image plane 60, allowing to simulate accurately the propagation of light in the near-eye light field projector 1. This step can comprise calculating positions for the different point-light sources 111,112,113 along the orthogonal axis x, y in the light source plane 10.

In one aspect, the output intensity of the combined images 310 can be maximized by selecting the brightest diffraction order that matches a desired combined or diffracted image 310, 511, 512. In other words, a refraction angle with which the combined modulated light beam 410 outputs the modulation device 40 is selected. The refraction angle corresponds to a position in the orthogonal axis x, y of the image plane 60.

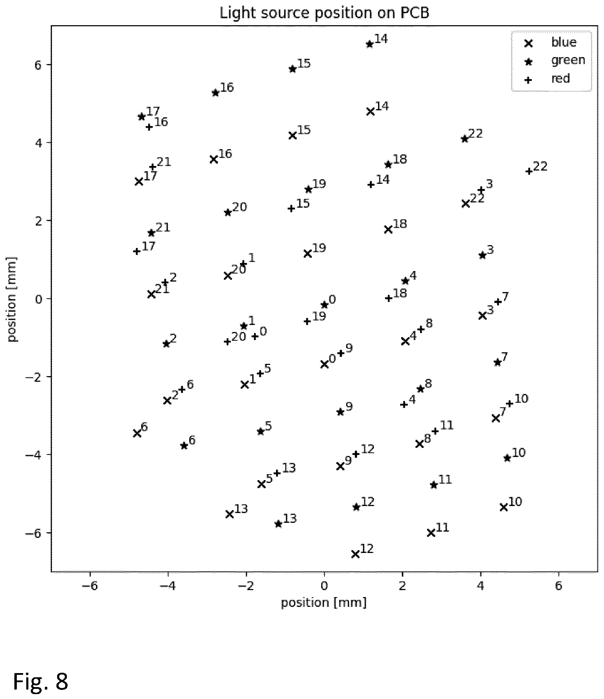

In certain instances, the brightest diffraction order matching a desired combined or diffracted image 310, 511, 512 may not be the absolute brightest diffraction order. In that case, the step of calculating an optimized lattice of point-light sources 11,112,113 in the light source plane 10 can be repeated for each combined or diffracted image 310, 511, 512 and each wavelength L. An example of a resulting optimized lattice of point-light sources 111,112,113 producing combined and diffracted images 310, 511, 512 is shown in **Fig. 8**, where the point-light sources 111, 112, 113 belonging to a single combined image 310 are tagged with the same number.

In the case the spatial filter 61 comprises an active shutter array (such as an electro-optical shutter) used as a tunable filter, the optimized arrangement of the point-light sources 111,112,113 in the light source plane 10 can be calculated individually per diffracted image 310, without taking into account possible overlap between different combined images 310 and diffracted images 511, 512.

The present disclosure further concerns a wearable device comprising the near-eye light field projector. The wearable device can comprise an augmented reality device, a wearable mixed reality device, or smart glasses.

Reference symbols in the figures

| | |
|---|---|
| 1 | near-eye light field projector |
| 10 | light source plane |
| 100 | light source |
| 11, 12, 13 point light | source |
| 111, 112, 113 | point light source |
| 21 | optical element, first projection optics |
| 22 | optical element, second projection optics |
| 23 | relay optics, first relay optical element |

| 24 | relay optics, second relay optical element |
|---|---|
| 200 | incident light beam |
| 211 | first focal plane |
| 231 | intermediate image plane |
| 31, 32, 33 | point-light image |
| 310 | combined image |
| 40 | modulation device |
| 400 | modulated light beam |
| 410 | combined modulated light beam |
| 411, 412 diffracted | modulated light beam |
| 51, 52 | diffracted images |
| 511, 512, 513 | diffracted images |
| 60 | image plane |
| 61 | spatial filter |
| 610 | pinhole |
| 70 | focus plane |
| 80 | viewpoint plane, eyebox |
| 81, 810 | viewpoint, combined viewpoint |
| 82, 83 | viewpoint, diffracted viewpoint |
| di | image separation distance |
| $d_v$ | viewpoint separation distance |

**Claims**

1. A near-eye light field projector (1) comprising:

   a light source (100) comprising a plurality of point light sources (111, 112, 113) arranged in a light source plane (10), wherein at least two point-light sources (111, 112, 113) have different wavelengths and each point light source (111, 112, 113) is configured to emit an incident light beam (200);
   a modulation device (40) configured to diffract the incident light beams (200) and generate modulated light beams (410, 411, 412);
   projection optics (21, 22) configured to project the modulated light beams (410, 411, 412) and form images (310, 511-513) in an image plane (60), the images (310, 511-513) forming a two-dimensional diffraction interference pattern comprising a plurality of diffraction orders; and
   relay optics (23, 24) configured to receive the images (310, 511-513) and to form viewpoints (810) in a viewpoint plane (80) destined to be in a user's eyebox;
   wherein the point light sources (111, 112, 113) are arranged in the light source plane (10) such that the modulated light beams comprise combined modulated light beams (410) forming combined images (310), each combined image (310) corresponding to an image of the diffracted point-light sources (111, 112,113) of different wavelength, and diffracted modulated light beams (411, 412) forming diffracted images (511-513);
   wherein the light field projector (1) further comprises a spatial filter (61) configured to block the diffracted modulated light beams (411, 412), such that the relay optics (23, 24) projects only viewpoints (810) from the combined images (310).

2. The projector according to claim 1,
   wherein said at least two point-light sources (111, 112,113) are arranged in the light source plane (10) such that the diffracted images (511-513) are distant from a combined image (310) by an image separation distance ($d_i$) large enough to avoid the diffracted images (511-513) overlapping the combined image (310).

3. The projector according to claim 2,
   wherein the separation distance ($d_i$) multiplied by a magnification factor of the relay optics (23, 24) corresponds to a diameter of at least 0.2 mm around the viewpoints (810).

4. The projector according to any one of claims 1 to 4,
   wherein the spatial filter (61) comprises an array of pinholes (610).

5. The projector according to any one of claims 1 to 4,

wherein the spatial filter (61) comprises a wavelength filter or an active shutter array.

6. The projector according to claim 5,
wherein the spatial filter (61) comprises an active shutter array used as a tunable filter.

7. The projector according to any one of claims 1 to 6,
wherein the projection optics comprise a first projection optics (21) configured to form a first focal plane (211), and a second projection optics (22) configured to project the combined images (310) in the image plane (60).

8. The projector according to claim 7,
wherein the modulation device (40) is arranged in the first focal plane (211).

9. The projector according to any one of claims 1 to 8,
wherein the spatial filter (61) is arranged in the image plane (60).

10. A method for arranging the point light sources (111, 112, 113) in the light source plane (10) of the near-eye light field projector (1) according to any one of claims 1 to 9, comprising:

    calculating the diffraction interference pattern from the modulation device (40);
    calculating an optimized lattice of combined and diffracted images (310, 511-513), where the diffracted images (511, 512) are distant from a combined image (310) by a separation distance ($d_i$); and
    from the optimized lattice of combined and diffracted images (310, 511-513), calculating an optimized arrangement of the point-light sources (111, 112, 113) in the light source plane (10).

11. The method according to claim 10,

    wherein said calculating a diffraction interference pattern comprises using the grating equation:

$$\theta m = arcsin \left( sin\, \theta_i - \frac{m\lambda}{d} \right),$$

    where m is the diffraction order, $\lambda$ is the wavelength, d is the period of the grating, $\theta_i$ the incident angle of the incident light beam (200) on the modulation device 40, and $\theta_m$ the output angle of the modulated light beam (410, 411, 412); and calculating the amplitude of a diffraction order using equation:

$$Sinc^2 \left[ \pi \frac{a}{\lambda} \left( sin\, \theta_{m_x} - sin\, \theta_i \right) \right] Sinc^2 \left[ \pi \frac{a}{\lambda} \left( sin\, \phi_{m_y} - sin\, \phi_i \right) \right]$$

    where $\theta$ and $\phi$ are the angles of diffraction in the two axis x, y of the modulation device (40), a is the lateral size of a pixel of the modulation device (40), $m_x$ and $m_y$ are the diffraction orders along orthogonal axis x, y of the modulation device (40), $\lambda$ is the wavelength, and i is the angle of the center of the diffraction envelope of the diffraction interference pattern.

12. The method according to claim 10 or 11,
wherein the output intensity of the combined images (310) is maximized by selecting the brightest diffraction order that matches a desired combined or diffracted image (310, 511-513).

13. The method according to any one of claims 10 to 12,
wherein said calculating an optimized arrangement of the point light sources (111, 112,113) in the light source plane (10) can be performed by ray tracing using a complete optical model of the system.

14. Wearable device comprising the near-eye light field projector according to any one of claims 1 to 9.

15. Wearable device according to claim 14,
comprising an augmented reality device, a wearable mixed reality device, or smart glasses.

Fig. 1

Fig. 2

(a)

(b)

Fig. 3

Fig. 4

Calculation of the
diffraction pattern from
the SLM/grating

Calculation of the
optimized viewpoint
lattice

Ray-tracing of the
optimized light source
positions

Optimized light source
array

Fig. 5

Fig. 6

Fig. 7

Fig. 8

Europäisches
Patentamt

European
Patent Office

Office européen
des brevets

# EUROPEAN SEARCH REPORT

Application Number

EP 22 20 7858

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/049995 A1 (UREY HAKAN [TR] ET AL) 13 February 2020 (2020-02-13) * abstract; figures 11-16 * * paragraphs [0007], [0175], [0006], [0088], [0124], [0125], [0120], [0175] * | 1-3,5,6, 8-15 | INV. G02B30/00 G02B27/01 |
| X | US 2011/149359 A1 (LEISTER NORBERT [DE]) 23 June 2011 (2011-06-23) * abstract; figures 1,2, * * paragraphs [0047], [0121], [0124], [0047], [0082], [0124] * | 1-6,9-13 | |
| X | EP 0 949 826 A2 (OPTIMIZE INC [US]) 13 October 1999 (1999-10-13) * abstract; figures 1,4 * * paragraphs [0027] - [0029], [0059], [0060] * | 1,7,14 | |

|  |  |
|---|---|
|  | TECHNICAL FIELDS SEARCHED (IPC) |
|  | H04N G02B |

The present search report has been drawn up for all claims

| Place of search | Date of completion of the search | Examiner |
|---|---|---|
| Munich | 28 April 2023 | Elflein, Wilhelm |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 7858

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2023

| Patent document cited in search report | | Publication date | Patent family member(s) | | Publication date |
|---|---|---|---|---|---|
| US 2020049995 | A1 | 13-02-2020 | CN | 110402410 A | 01-11-2019 |
| | | | EP | 3590001 A1 | 08-01-2020 |
| | | | US | 2020049995 A1 | 13-02-2020 |
| | | | WO | 2018160146 A1 | 07-09-2018 |
| US 2011149359 | A1 | 23-06-2011 | DE | 102009060582 A1 | 30-06-2011 |
| | | | JP | 2011150326 A | 04-08-2011 |
| | | | US | 2011149359 A1 | 23-06-2011 |
| EP 0949826 | A2 | 13-10-1999 | AU | 2255399 A | 14-10-1999 |
| | | | CA | 2267876 A1 | 06-10-1999 |
| | | | EP | 0949826 A2 | 13-10-1999 |
| | | | JP | 2000035551 A | 02-02-2000 |
| | | | US | 5926318 A | 20-07-1999 |
| | | | US | 6008939 A | 28-12-1999 |
| | | | US | 6040946 A | 21-03-2000 |

EPO FORM P0459

For more details about this annex : see Official Journal of the European Patent Office, No. 12/82

## REFERENCES CITED IN THE DESCRIPTION

**Patent documents cited in the description**

- US 20180160784 A1

**Non-patent literature cited in the description**

- *Using Lasers with DLP DMD technology,* September 2008, https://www.ti.com/lit/pdf/dlpa037